# EUROPÄISCHE PATENTANMELDUNG

(11) **EP 1 465 328 A1**
(43) Veröffentlichungstag der Anmeldung: **06.10.2004**
(21) Anmeldenummer: 04008152.3
(22) Anmeldetag: 02.04.2004
(51) Int. Cl.: H02K 41/03

(54) **Linearmotor mit Primärteil und Sekundärteil**

(30) Priorität: 04.04.2003 DE 10315655
(71) Anmelder: Fachhochschule Aachen, 52428 Jülich (DE)
(72) Erfinder: Hodapp, Josef, Prof. Dr., 50935 Köln (DE)
(74) Vertreter: Tergau & Pohl Patentanwälte

(57) **Zusammenfassung**

Linearmotor (1) mit einem mit Spulen (4) ausgerüsteten Primärteil (3) sowie mit einem mit Permanentmagneten (6) ausgerüsteten Sekundärteil(5), dadurch gekennzeichnet, dass der Sekundärteil (5) das Primärteil (3) zumindest teilweise umschließt, dass Bestandteile des inneren Primärteils (3) neben den Spulen (4) Jochbauteile (11) sind, die eine zentrale Achse (2) umgeben und äußere Pole (13, 14) bilden, und dass Bestandteile des Sekundärteils (5) neben den Permanentmagneten (6) ein der äußeren Form des Primärteils (3) angepasster und dieses zumindest teilweise umschließender Träger (16) ist, auf dessen Innenseite die Permanentmagneten (6) befestigt sind und der den magnetischen Rückschluss für die Permanentmagnetpole bildet.

## Beschreibung

Die Erfindung bezieht sich auf einen Linearmotor mit einem mit Spulen ausgerüsteten Primärteil sowie mit einem mit Permanentmagneten ausgerüsteten Sekundärteil.

Bei vielen Anwendungen in der Technik werden lineare Bewegungen benötigt. Beispiele dafür sind die Achsen von Werkzeugmaschinen, direkt angetriebene Kolbenpumpen, Spann- und Schließ-Zylinder, Bewegungen von Bohrspindeln usw. Auch bei der Betätigung von Handling-Systemen oder beim Verfahren von Robotern finden lineare Bewegungen statt, die entsprechende Antriebe benötigen.

Es ist bekannt, Linearmotoren einzusetzen. Ihr wesentlicher Nachteil besteht darin, dass ihre Entwicklung und Herstellung mit sehr hohen Kosten verbunden sind. Vielfach werden deshalb rotierende Maschinen verwendet. Die Umsetzung der Rotationsbewegung in die lineare Bewegung erfolgt beispielsweise mit Kugelspindeln, Zahnriemen, Exzentern o.dgl.

Zum Stand der Technik gehören planare und tubulare Linearmotoren. Generell zeichnen sich diese durch eine große Verfahrgeschwindigkeit, hohe Positioniergenauigkeit und hohe Beschleunigung aus. Zudem sind sie durch die berührungslose Kraftübertragung überwiegend verschleißlos. Bei den planaren Linearmotoren sind die Magnete des Sekundärteils in einer Ebene angeordnet. Der Primärteil wird, gelagert über Linearführungen seitlich des Sekundärteils, mit definiertem Luftspalt über den Sekundärteil bewegt. Tubulare Linearmotoren sind aus den Dokumenten DE-A-100 53 321 und DE-A-1 95 42 551 bekannt. Sie besitzen ein mit Permanentmagneten ausgerüstetes Sekundärteil, das von einem mit Spulen ausgerüsteten Primärteil umschlossen ist.

Nachteilig an den Lösungen nach dem Stand der Technik ist, dass sie mehr oder weniger große Magnetflächen besitzen, deren Magnetfelder nach außen hin wirksam sind. Die zu erzeugenden Magnetfelder müssen relativ stark sein, da die zwischen Primär- und Sekundärteil wirkenden Kräfte etwa doppelt so groß sind wie die gewünschten Vorschubkräfte. Auf in der Umgebung des Motors vorhandene oder z. B. bei Werkzeugmaschinen erzeugte Partikel üben die Magnetfelder eine anziehende Kraft aus. Um der dadurch vorhandenen besonders hohen Verschmutzungsgefahr zu begegnen, müssen die Motoren nach dem Stand der Technik durch verschiebbare Abdeckungen geschützt werden. Ihre Kosten sind hoch, ihre Integration in Maschinen aufwendig. Tubulare Linear-Motoren nach dem Stand der Technik können häufig die notwendigen Kräfte nicht liefern. Schließlich besteht bei tubularen Motoren nach dem Stand der Technik, bei denen der Primärteil den Sekundärteil vollständig umschließt, das Problem der Befestigung des Sekundärteils. Es kann nur an seinen Endpunkten gehaltert werden, wodurch die Länge der Verfahrwege wegen der Gefahr von Schwingungen stark beschränkt ist.

Der vorliegenden Erfindung liegt die Aufgabe zugrunde, einen Linearmotor der eingangs erwähnten Art vorzuschlagen, dessen Verschmutzungsgefahr maßgeblich reduziert ist. Außerdem soll der Linearmotor so ausgebildet sein, dass er eine relativ große Kraftdichte besitzt und dass große Kräfte erzeugt werden können. Schließlich soll der Motor nur aus wenigen Grundelementen bestehen, so dass seine Kosten im Vergleich zu den Kosten der Lösungen nach dem Stand der Technik geringer sind.

Erfindungsgemäß wird diese Aufgabe durch die kennzeichnenden Merkmale der Patentansprüche gelöst.

Ein wesentlicher Vorteil der erfindungsgemäßen Lösung besteht darin, dass der Motor nach außen magnetisch inaktiv ist, d. h., dass der Motor wesentlich verschmutzungsunempfindlicher ist. Er kann sehr flexibel an eine Arbeitsmaschine angepasst werden. Flexibel bedeutet, dass der Motor derart modifiziert werden kann, dass Verfahrwege von wenigen cm (Dossierpumpen) bis mehreren m (Achsen von Werkzeugmaschinen) realisiert werden können. Weiterhin kann ein Motor nach der Erfindung eine hohe Kraftdichte und auch absolut große Kräfte aufweisen. Dieses gilt insbesondere im Vergleich zu planaren Linearmotoren, da bei diesen die Motorwicklung nicht voll genutzt werden kann. Ihre Wickelköpfe tragen nicht zur Kraftwirkung bei. Schließlich kann ein Linearmotor nach der Erfindung aus möglichst wenigen Einzelteilen aufgebaut werden.

Die wesentlichen Vorteile eines Motors nach der Erfindung sind demnach:
- hohe Kraftdichte durch optimale Nutzung der Wicklung;
- hohe erzielbare Kräfte durch außen liegendes Sekundärteil, d. h. bei gegebenem Bauraum des Motors ist die Oberfläche des Luftspaltes (Trennung zwischen Sekundärteil und Primärteil) viel größer als bei innenliegendem Sekundärteil (die erzielbaren Kräfte sind proportional zur Fläche des Luftspaltes);
- speziell beim vollkommen geschlossenen Sekundärteil keine anziehenden Kräfte zwischen Primär- und Sekundärteil.

Ob beim erfindungsgmäßen Linearmotor der Primärteil oder der Sekundärteil ortsfest ist, hängt von den jeweiligen Anforderungen ab. Ein ortsfester Primärteil hat den Vorteil, dass seine Strom- und seine eventuelle Kühlmittelversorgung einfach realisiert werden können. Schleppkabel oder ähnliche Einrichtungen sind nicht erforderlich. Beim ortsfest gehaltenen Sekundärteil ist die Verwendung von supraleitenden Permanentmagneten, die ausreichend tief gekühlt werden müssen, einfacher zu realisieren.
Weitere Vorteile und Einzelheiten der Erfindung sollen anhand von in den Figuren 1 bis 15 schematisch dargestellten Ausführungsbeispielen erläutert werden. Es zeigen:
- Fig. 1 bis 4: Ausführungen von Linearmotoren nach der Erfindung mit unterschiedlichen Querschnitten,
- Fig. 5, 6: Beispiele für Grundelemente, aus denen ein Linearmotor nach der Erfindung aufgebaut sein kann,
- Fig. 7, 8: Teilschnitte des Sekundärteils, anhand denen Montageverfahren erläutert werden,
- Fig. 9 bis 11: Beispiele für gegenseitige Längsführungen von Primär- und Sekundärteil,
- Fig. 12: ein weiteres Beispiel für eine Längsführung sowie für eine Einrichtung zum Festsetzen des Läufers,
- Fig. 13: einen Linearmotor mit Mitteln zur Abdichtung des Sekundärteils gegenüber dem Primärteil,
- Fig. 14: einen Linearmotor mit Mitteln zur Positionsbestimmung und
- Fig. 15: einen Linearmotor mit Mitteln zur Verminderung auftretender Rastkräfte.

In allen Figuren sind der Linearmotor mit 1, seine Längs- bzw. Bewegungsachse mit 2, sein innen angeordneter Primärteil mit 3, die Spulen des Primärteiles mit 4, sein äußerer Sekundärteil mit 5 und die Permanentmagneten des Sekundärteiles 5 mit 6 bezeichnet.

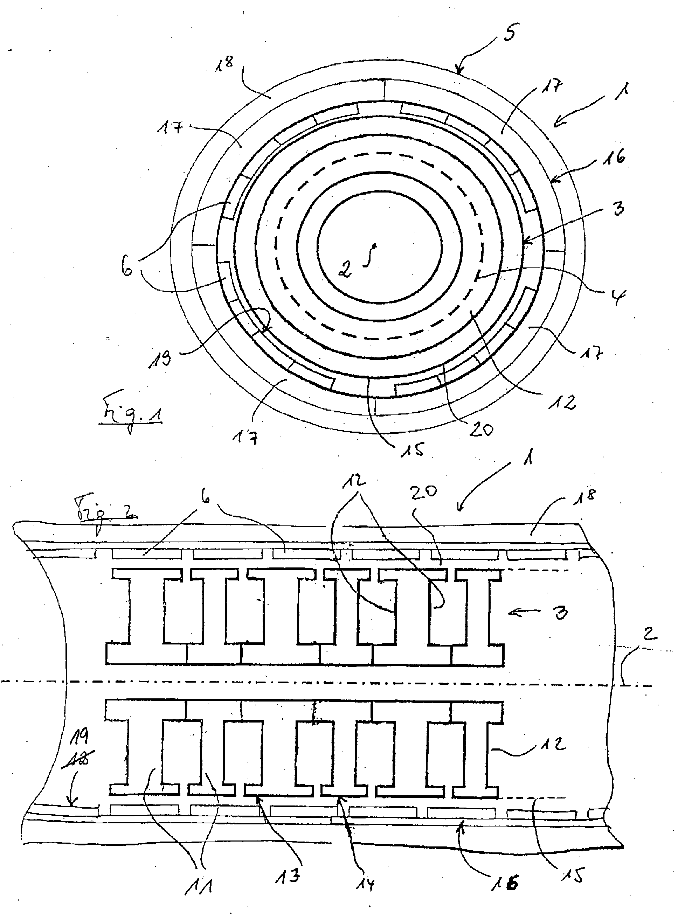

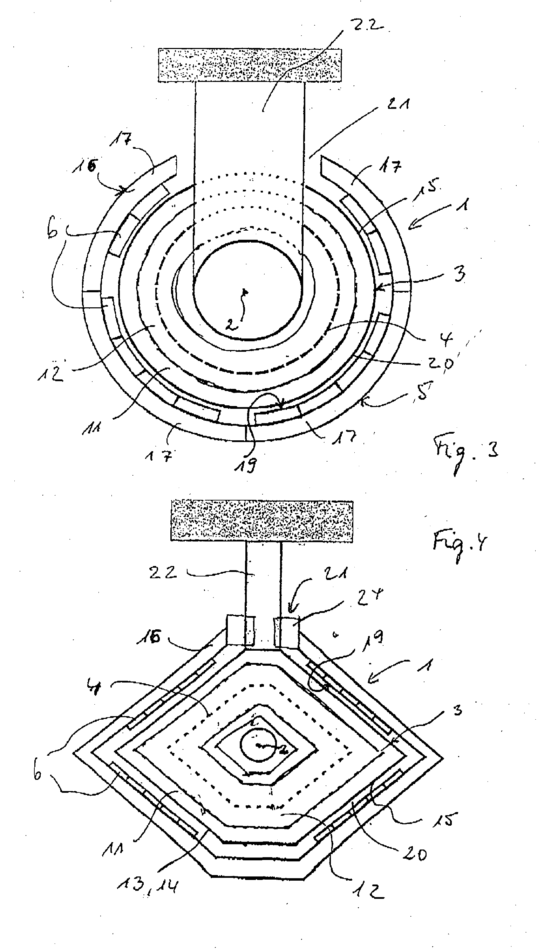

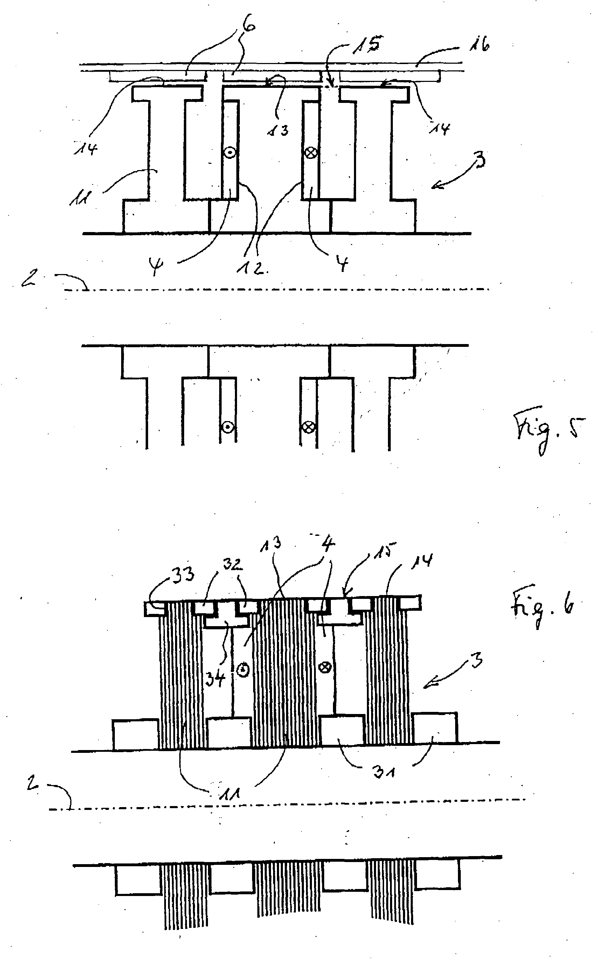

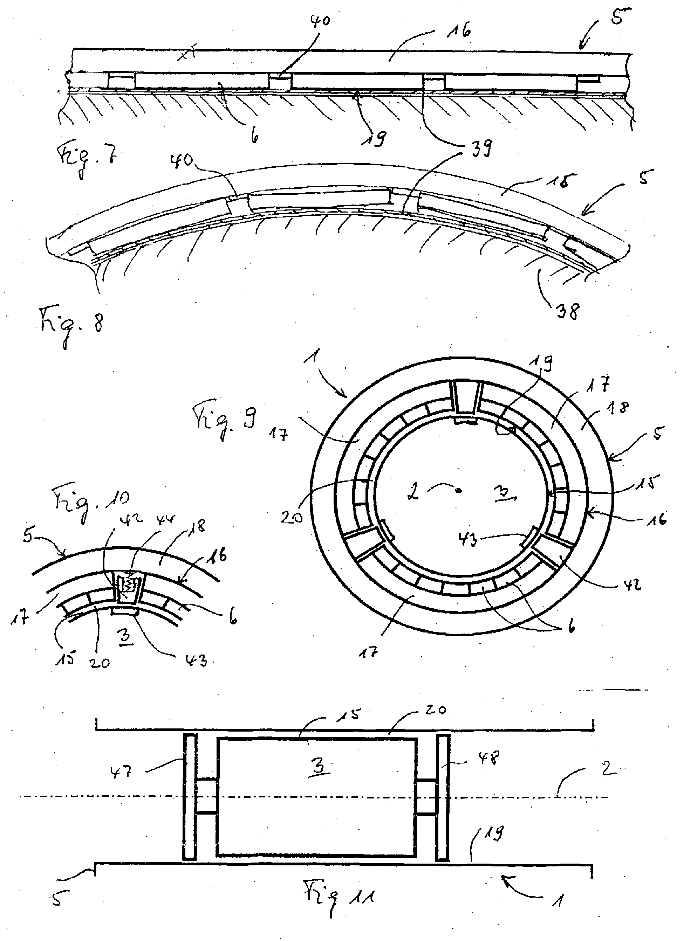

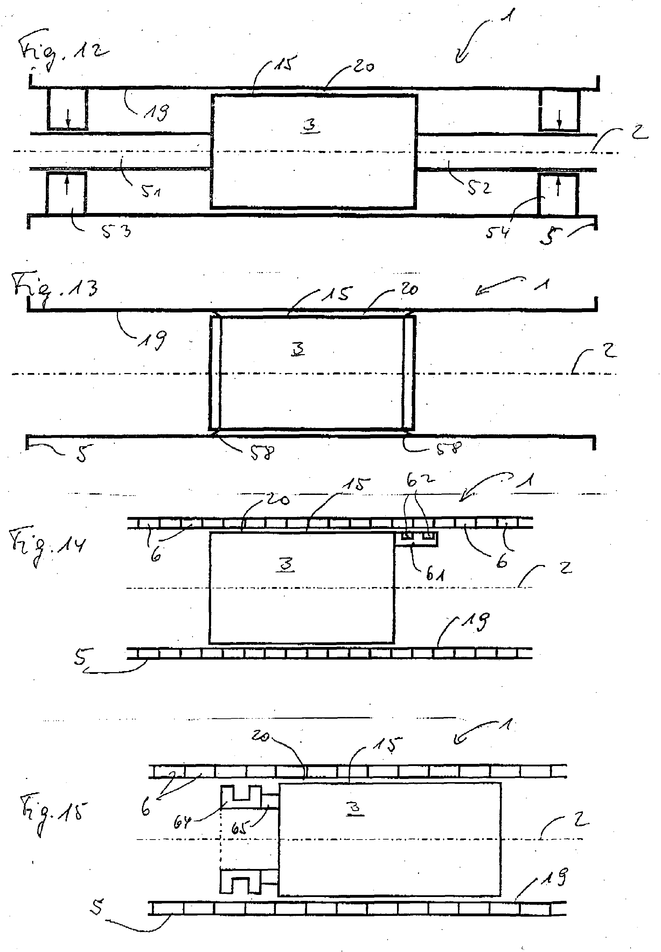

Die Figuren 1 (Querschnitt) und 2 (Längsschnitt) zeigen schematisch eine Ausführungsform mit einer konzentrischen Bauweise. Der Primärteil 3 besitzt im Querschnitt etwa doppel-T-förmige Polringe 11, deren seitliche Vertiefungen 12 Platz für z. B. ringförmige Spulen 4 bilden, die in Figur 1 schematisch durch eine gestrichelte Linie angedeutet sind. Die Polringe 11 bilden umlaufende äußere Pole 13, 14 (Figuren 2 und 5), die sich in einer äußeren Umfangsfläche 15 des Primärteiles 3 befinden.

Der Sekundärteil 5 besitzt den äußeren Polen 13, 14 der Polringe 11 zugeordnete Permanentmagnete 6, die auf der Innenseite eines rohrabschnittförmigen Jochbauteils 16 befestigt sind. Dieses Jochbauteil 16, das aus mehreren längsgeteilten Segmenten 17 bestehen kann, ist von einem Rohrabschnitt 18, z. B. aus Stahl, umgeben, das die Stabilität des Motors 1 sichert und Gehäusefunktion haben kann. Zwischen der äußeren Umfangsfläche 15 des Primärteiles 3 und der inneren, von den Magneten 6 gebildeten Umfangsfläche 19 des Sekundärteiles 5 befindet sich ein im wesentlichen ringförmiger Luftspalt 20, der zwar möglichst klein sein soll, die Relativbewegung von Primärteil 3 und Sekundärteil 5 aber nicht behindern darf.

Als Permanentmagnete 6 sind ebene, rechteckige oder quadratische Tafeln (z. B. 20x30x4 mm)vorgesehen, die derart magnetisiert sind, dass sich die Pole im Zentrum der einander gegenüberliegenden Flachseiten befinden. Die Magnete 6 bilden umlaufende, voneinander beabstandete Reihen mit jeweils einheitlicher Polarität. In axialer Richtung haben die Reihen wechselnde Polaritäten. Nur aus Gründen der vereinfachten Darstellung sind die Permanentmagnete 6 vielfach als gekrümmte Tafeln ohne Zwischenabstand dargestellt. Gekrümmte Magnettafeln wären zwar auch einsetzbar, sind aber aufwendig in Bezug auf ihre Herstellung.

Die Figuren 3 und 4 zeigen Linearmotoren 1 nach der Erfindung, deren Aufbau von einer im Querschnitt streng konzentrischen Bauweise abweicht und die für lange Verfahrwege besonders geeignet sind. Bei der noch weitgehend kreisförmigen Ausführung nach Figur 3 besitzt der Sekundärteil 5 eine sich längs erstreckende Öffnung 21. Durch diese Öffnung hindurch erstrecken sich zwei oder mehrere Träger 22, die der stabilen Befestigung des Primärteils 3 an der jeweiligen Arbeitsmaschine dienen. Der Winkel, mit dem der Sekundärteil 5 den Primärteil 3 umschließt, sollte zum einen möglichst groß sein; zum anderen sind auch Ausführungen mit Umschließungswinkeln von 340° und weniger im Sinne der Erfindung vorteilhaft.

Bei der Ausführung nach Figur 4 sind die Bauteile des Linearmotors 1 im Querschnitt mehreckig, z. B. fünf- bis achteckig, um sie besser in den Einbauraum in der Arbeitsmaschine anpassen zu können. Auch bei diesem Beispiel weist der Sekundärteil 5 eine sich axial erstreckende Öffnung 21 auf, durch die sich Träger 22 für den Primärteil 3 erstrecken. Zusätzlich sind schematisch Führungsmittel 24 für den Sekundärteil 5 an den Trägern 22 angedeutet. Linearführungen dieser Art können mit Kugellagern, gegenseitigen Gleitflächen usw. ausgerüstet sein.

Figuren 5 und 6 zeigen etwas detaillierter die Gestaltung und den Aufbau des Primärteiles 3. Seine Bestandteile sind aktive und passive Pole 13 bzw. 14, die von den Polringen 11 gebildet werden und den Permanentmagneten 6 zugewandt sind. In den Vertiefungen 12 der Polringe 11, die aktive Pole 13 bilden, befinden sich konzentrisch gewickelte Spulen 4, die zu einer Drehstromwicklung verschaltet sind. Die Spulen 4 sind gegensinnig vom Strom durchflossen. Die Breite der aktiven Pole 13 entspricht der Breite eines dauermagnetischen Pols, gebildet von einem Permanentmagneten 6. Aktive Pole 13 und passive Pole 14, die letzteren gebildet von Polringen 11 ohne Spulen, wechseln einander ab. Die Breite der passiven Pole 14 ist kleiner oder größer als die Breite der aktiven Pole 13. Zweckmäßig ist sie kleiner und beträgt ca. 2/3 der Breite der aktiven Pole 13. Sechs aktive Pole 13 und sechs passive Pole 14 bilden ein Grundelement des erfindungsgemäßen Linearmotors 1. Dabei bilden jeweils zwei aktive Pole 13 einen Strang der Drehstromwicklung. Der jeweils erste und vierte Pol, zweite und fünfte Pol und dritte und sechste Pol gehören zu einem Strang. Abhängig von den benötigten Kräften können mehrere Grundelemente aneinander gereiht werden. Die jeweils äußeren Pole eines Linearmotors 1 nach der Erfindung sollten immer passive Pole 14 sein. Deshalb sollte jedem Primärteil 3 unabhängig von der Anzahl der Grundelemente jeweils ein passiver Pol 14 hinzugefügt werden.

Das vorgeschlagene allgemeine Konzept des Motors 1 kann auch in einer abgewandelten, insbesondere in einer zu den obigen Ausführungsformen geänderten Bauweise realisiert werden. In einer besonders bevorzugten Abwandlung werden z. B. die so genannten nicht-aktiven/passiven Pole 14, die beispielsweise in Fig. 2, 5 und 6 gezeigt sind, weggelassen und der entstehende Raum durch die Spulen der benachbarten aktiven Pole 13, vorzugsweise je zur Hälfte mit ausgefüllt. Der zu der Längsachse 2 hin orientierte Teil eines passiven Poles 14 bleibt dabei erhalten bzw. wird durch einen weiteren Polring ersetzt, um zur Führung des magnetischen Flusses zu dienen. Die relative Lage der aktiven Pole 14 bezogen auf die Magnete 6 des Sekundärteils 5 bleibt dabei erhalten.

Figur 6 lässt eine praktische Ausführungsform für den Primärteil 3 erkennen. Die sich radial erstreckenden Abschnitte der Polringe 11 bestehen jeweils aus Ringblechpaketen, wie sie beispielsweise bei Ringkerntransformatoren eingesetzt werden. Zweckmäßig ist es, die jeweiligen Ringbleche mit mindestens einer, zweckmäßig mehreren Umfangsunterbrechungen zu versehen, um während des Betriebs des Linearmotors 1 Ringströme zu vermeiden. Zweckmäßig bestehen die jeweiligen Ringbleche aus zwei oder drei Umfangsabschnitten. Die Unterteilung in noch mehr Umfangsabschnitte wäre günstig, ist aber vom Montageaufwand her nicht mehr zweckmäßig.

Im Bereich ihrer Innenseiten stützen sich die Blechpakete in axialer Richtung über Ringe 31 aus einem Eisen-Verbundmaterial (z. B. einer Mischung aus 95 % Fe-Pulver und 5% Kunststoff- oder Epoxydharz-Zusatz) ab. Die Ringe 31 können auch aus Ringkernblechen bestehen, die um ihre zentrale Achse gewickelt sind. Die gegenseitige Abstützung der Blechpakete auf ihrer äußeren Seite erfolgt über Polringe 32, die den Blechpaketen unmittelbar anliegen, zweckmäßig zum Teil in seitliche Aussparungen 33 eingelassen sind. Zwischen den jeweiligen Polringen 32 befinden sich Stützringe 34 aus nicht magnetischem Material, die vorteilhafterweise im Querschnitt T-förmig sind und die Polringe 32 seitlich und von innen umfassen. Dadurch entsteht eine vollständig geschlossene Umfangsfläche 15, die das Eindringen von Verschmutzungen verhindert.

Anhand der Figur 6 soll weiterhin die Art und Weise der Montage des Primärteils 3 erläutert werden. Sie geschieht mit Hilfe eines Spanndorns aus nicht-magnetischem Werkstoff, dessen Außendurchmesser dem Innendurchmesser der Polringe 11 bzw. Blechpakete sowie der Abstandsringe 31 entspricht. Nach dem Aufschieben der einzelnen Bauelemente für die gewünschte Anzahl von Grundelementen auf den Spanndorn erfolgt deren gegenseitige Befestigung sowie das Schließen der spaltförmigen Zwischenräume zwischen den peripheren Bauteilen (Blechpakete, Polringe 32, Abstandsringe 31) und vorzugsweise das Glätten der äußeren Umfangsfläche 15 des Primärteils 3. Danach wird der Spanndorn entfernt. In dieser Weise können die Primärteile 3 montiert werden, unabhängig davon, ob sie konzentrisch oder mit einer davon abweichenden Form aufgebaut sind. Es besteht auch die Möglichkeit, als Montagedorn ein Rohr oder eine Stange zu verwenden, die nach der Montage der Bauteile nicht entfernt wird und dadurch die Stabilität des Primärteils 3 erhöht.

Hinsichtlich der Führung des Magnetfeldes im Primärteil 3 liegt also den besonders zu bevorzugenden Ausführungsformen das Konzept zugrunde, dass das Magnetfeld von der Mitte des Motors 1, also von einem bedarfsweise mehr oder weniger großen Bereich um die Längsachse 2 herum, insbesondere vom Bereich innerhalb einer inneren Wandung des Primärteils 3, ferngehalten wird.

So ist beispielsweise zur Herstellung des Motors 1 mittig ein so genannter Spanndorn vorgesehen, der im magnetischen System des Motors keine Funktion hat, sondern zur mechanischen Befestigung der Spulen 4 und der Joche im Motor dient. Dieser Spanndorn kann nach der Montage der Spulen 4 und Bleche entfernt werden und dieses Volumen kann für andere Komponenten benutzt werden.

Das Fernhalten des Magnetfeldes von der Mitte des Motors 1 hat folgende Vorteile:
- Die Kühlung des Motors 1 bzw. der Spulen 4 kann von zentraler Bedeutung für die hohe Ausnutzung des Motors 1 sein. Kühlsysteme werden üblicherweise in Kupfer, Edelstahl oder Aluminium ausgeführt. Alle diese Werkstoffe sind nicht ferromagnetisch. Im Rahmen des obigen Konzepts wurde beispielsweise erkannt, dass der Raum in der Mitte des Motors 1 besonders zu bevorzugen ist, um eine Kühlung der Spulen, z. B. mit Wasser, unterzubringen. Aus diesem Grund wird in den besonders bevorzugten Ausführungsformen die Mitte des Motors 1 nicht zur Führung des Magnetfeldes verwendet.
- Das Konzept des Motors 1 sieht auch vor, dass der Motor 1 mit beliebigem Durchmesser aufgebaut werden kann. Es gibt z. B. Anwendungen des Motors 1, bei der in der Mitte des Motors, also um einen bedarfsweise mehr oder weniger großen Bereich um die Längsachse 2 herum, vorzugsweise mittig, eine Bauchspindel angebracht wird. Der Motor 1 dient dann dazu, die Spindel beim Bohren axial mit der vorgesehenen Bohrgeschwindigkeit zu bewegen. Der Motor 1 wird dann also um die Spindel herum aufgebaut und die Mitte des Motors 1 bleibt dann vorzugsweise weitgehend einbautenfrei. Die Bleche der einzelnen Joche können daher wie in Fig. 6 zu sehen mit den Abstandsringen 31 verbunden werden. Die Bleche können auch mit den Polringen 32 verbunden werden. Dieses Prinzip ist daher mit beliebigem Durchmesser realisierbar. Der Spanndorn selbst kann dabei auch als Rohr ausgeführt werden.
- Der Raum in der Mitte kann auch völlig frei gehalten werden. Dies ist z. B. bei großen Durchmessern des Motors 1 sinnvoll. Die erzielbare Kraft des Motors hängt nämlich neben der Kühlung in erster Linie von der Oberfläche des Primärteils 3 im Luftspalt 20 ab. Die Oberfläche des Primärteils 3 ist etwa gleich der Länge des Spulensystems 4 multipliziert mit dem Umfang des Luftspaltes 20. Für sehr große Kräfte wird man also den Durchmesser des Motors 1 möglichst groß zu wählen haben. Um bei dieser Ausgestaltung einer zu bevorzugenden Ausführungsform das Gewicht nicht zu sehr anwachsen zu lassen, hat das Konzept erkannt, dass die Mitte des Motors 1 einbautenfrei bleibt. Es lassen sich also Motoren mit großen Schubkräften und vergleichsweise geringem Gewicht bauen. In dem Fall sieht eine Abwandlung der Ausführungsform eher wie ein dickwandiges Rohr aus. Der Spanndorn wird bei einer solchen Abwandlung als Rohr ausgeführt, auf das die Spulen 4 und Jochbleche aufgeschoben werden.
- Durch die Abstandsringe 31 und/oder die Polringe 32 innerhalb der Spulen 4, vorzugsweise in Form von Kupferspulen, ist auch ein Raum geschaffen, in dem in einer weiteren Ausführungsform mit Hilfe axialer Bohrungen in diesen Abstandsringen 31 und/oder Polringen 32 Verbindungskanäle zur Verbindung der einzelnen Spulen 4 realisiert werden. Man spart sich für den Fall vorteilhafterweise große Schlitze in den Jochblechen, die üblicherweise für die Verdrahtung vorgesehen wären. Eine üblicherweise vorzusehende Unterbrechung der ringförmigen Bleche zur Vermeidung von Kreisströmen wird bei dieser und anderen Ausführungsformen im Rahmen des erläuterten Konzepts durch eine Teilung der Bleche in zwei Hälften erreicht. Die Stabilität wird dann dadurch erreicht, dass die Bleche übereinander jeweils um 90° versetzt geschichtet werden. Damit bleibt die Rotationssymmetrie vollständig erhalten.

Ein zweckmäßiges Montageverfahren des Sekundärteils 5 soll anhand der Figuren 7 und 8 beschrieben werden, und zwar für eine Ausführung, bei der der Sekundärteil 5 vollständig geschlossen ist. Entsprechend den Figuren 7 (Teil-Längsschnitt) und 8 (Teil-Querschnitt) erfolgt die Montage mit Hilfe eines zylindrischen Trägers 38, auf den zunächst ein möglichst dünnwandiger Edelstahlzylinder 39 (nicht oder nur schwach magnetisierbar) aufgeschoben wird. Danach erfolgt das Aufbringen eines zylindrischen Gitters 40, dessen rechteckige oder quadratische Öffnungen den Abmessungen der Permanentmagnettafeln 6 entsprechen und dessen Gitterbreite den gewünschten Abstand der Magneten 6 definiert. Die Magneten 6 werden in die Gitteröffnungen eingesetzt, mit dem Gitter 40 und dem Edelstahlzylinder 39 zu einer Einheit verklebt und danach der äußere Rückschluss ausgeführt. Dazu kann auf die montierten Magnete 6 ein als Rohr ausgebildetes Jochbauteil 16 aufgeschoben werden. Besonders zweckmäßig ist es jedoch, das Jochbauteil 16 dadurch zu bilden, dass ein dünnes Blech mehrfach um die Magnete 6 gewickelt wird. Wenn es für die Stabilisierung des Gesamtaufbaus nötig ist, kann schließlich noch ein weiteres Rohr 18, wie es in den Figuren 1 und 2 dargestellt ist, auf die Blechwicklung aufgeschoben werden. Abschließend erfolgt die Entfernung des zylindrischen Trägers 38.

Das zylindrische Edelstahlblech 39 hat die Aufgabe, eine exakt zylindrische Innenfläche des Sekundärteils 5 zu bilden. Im Zwischenraum zwischen dem Edelstahlblech 39 und dem Jochbauteil 16 befinden sich die ebenen Magnettafeln 6. Ist eine exakt zylindrische Innenoberfläche des Sekundärteils 5 nicht erforderlich, kann auf den Edelstahlzylinder 39 verzichtet werden. In diesem Fall muss der zylindrische Träger 38 mit einem Trennmittel beschichtet sein, damit er nach der Montage der zu einer Einheit verklebten Bauteile entfernt werden kann. Der verhärtete Kleber bildet in diesem Fall die innere Umfangsfläche 19 des Sekundarteils 5.

Bei Ausführungen, bei denen der Sekundärteil aus mehreren, sich axial erstreckenden Segmenten 17 (Figuren 1 und 2) besteht oder bei denen der Sekundärteil 5 eine sich axial erstreckende Öffnung 21 besitzt, sind die Schwierigkeiten der Montage der Magnete 6 weniger groß. Dennoch ist der Einsatz von Montagedornen, die der Querschnittsform der jeweiligen Ausführung angepasst sind, zweckmäßig.

Hinsichtlich der Montage der Magnetteile 6, beispielsweise Magnete, im Sekundärteil 5 ergeben sich eine Reihe von Verbesserungen. Üblicherweise ist nämlich die Montage der Magnetteile 6, z. B. in Form von Magnetplatten, innerhalb des Sekundärteils 5, das z. B. in Form eines Rohres vorliegt, nicht einfach. Das vorliegende Konzept sieht vorteilhafterweise ein Verfahren vor, bei dem das Sekundärteil 5 von innen nach außen aufgebaut wird. Dazu wird zunächst ein Deckblech auf ein Montagerohr aufgebracht. Der Außen-Durchmesser dieses Montagerohres entspricht dem Innen-Durchmesser des Sekundärteils 5. Auf das Deckblech werden dann die Magnetteile 6 aufgebracht, z. B. geklebt, wobei die exakte Position dieser Magnetteile 6, z. B. durch ein Metallgitter gewährleistet wird. Dieses Gitter erhöht auch die Stabilität des Sekundärteils 5. Um die Magneteile 6 wird dann ein Blech gewickelt, welches den Rückschluss für das Magnetfeld der Permanentmagnete ergibt. Das ganze lässt sich zur Erhöhung der Stabilität noch in ein weiteres, den Motor 1 nach außen begrenzendes Rohr einschieben. Aufgrund dieses einfachen Montageverfahrens wird eine ganz besonders vorteilhafte vollkommen geschlossene, zylindrische Bauform des Motors 1 zur Verfügung gestellt. Diese Bauform ist nach außen magnetisch völlig inaktiv. Metallteile werden daher vom Motor 1 nicht angezogen, was bei Werkzeugmaschinen ein großes Problem darstellt und üblicherweise zu aufwendigen Abdeckungen führen würde.

Während des Betriebs des Linearmotors 1 bewegen sich Primärteil 3 und Sekundärteil 5 relativ zueinander, und zwar dem axialen Wanderfeld entsprechend, das mit Hilfe des Primärteils 3 erzeugt wird. In der Praxis kann eine gegenseitige Berührung von Primärteil 3 und Sekundärteil 5 nicht vermieden werden, so dass es zweckmäßig ist, Mittel zur Längsführung vorzusehen.

Hinsichtlich von Zusatzfunktionen im Motor 1 ergeben sich eine Reihe von Verbesserungen. Gemäß besonders zu bevorzugenden Ausführungsformen sind die Mittel zur Längsführung in den Motor 1 integriert, d. h. insbesondere innerhalb eines Außenumfangs des eigentlichen Motors 1 bereits mit untergebracht. Auch Zusatzfunktionen wie Bremse und Dichtungen sind in diesen Motor 1 integrierbar.

Bei einer ersten Lösung bilden die zylindrischen, einander zugewandten Zylinderflächen 15, 19 von Primärteil 3 und Sekundärteil 5 selbst die gewünschte Linearführung. Sie können mit geeigneten Beschichtungen versehen sein, z. B. mit Chrom- oder Kunststoffschichten (vorzugsweise Tetrafluor-Äthylen). Wenn die Innenfläche des Sekundärteils 5 von einem Edelstahlzylinder 39 gebildet wird, reicht es aus, wenn die Umfangsfläche des Primärteils 3 eine solche Kunststoffbeschichtung aufweist. Statt Edelstahl ist auch eine aus anodisiertem Aluminium Gleitfläche vorteilhaft. Schließlich besteht die Möglichkeit, Keramikschichten als Gleitflächen einzusetzen.

Figur 9 zeigt eine weitere Alternative für eine gegenseitige Führung. Als Bestandteile des Sekundärteils 5 sind drei über den Umfang gleichmäßig verteilte Führungsleisten 42 vorgesehen. Ihre Innenflächen ragen um einen kleinen Betrag aus der von den Permanentmagneten 6 gebildeten inneren Umfangsfläche 19 des Sekundärteils 5 heraus. Wenn nicht die gesamte Oberfläche des Primärteils 3 geeignet beschichtet ist, besteht die Möglichkeit, auf der äußeren Umfangsfläche des 15 Primärteils 3 Gegenlager 43 vorzusehen. Gleitlagerelemente, Linear-Kugellager-Elemente o. ä. Bauteile können eingesetzt werden. Die Führungsleisten 42 unterbrechen jeweils das Magnetsystem. Wie bei den Ausführungen nach den Figuren 1 und 2 besitzt der Sekundärteil 5 der Ausführung nach Figur 9 sich axial erstreckende Segmente 17 die vom äußeren Stahlrohr 18 umfasst sind.

Während des Betriebs des Linearmotors erhöht sich die Temperatur des Primärteils 3, so dass seine Wärmeausdehnung berücksichtigt werden muss. Damit eine radiale Ausdehnung der Umfangsfläche des Primärteils 3 nicht zu Störungen führt, ist es zweckmäßig, wenn die Führungsleisten 42 in radialer Richtung federnd am Sekundärteil 5 befestigt sind. Der in Figur 10 dargestellte Teilschnitt aus der Figur 9 zeigt eine Führungsleiste 42, die sich auf dem Rohr 18 über die Feder 44 abstützt. Statt einer Feder können auch Kunststoffschichten vorgesehen sein. Die Federkonstante einer Führung dieser Art muss größer sein als die negative radiale Steifigkeit des Primärteils 3 gegenüber dem Sekundärteil 5. Damit ist gewährleistet, dass das Führungssystem den Primärteil 3 in allen Betriebszuständen zentriert.

Federnde Führungsleistungen der beschriebenen Art sind nicht erforderlich, wenn der Primärteil 3 ausreichend z. B. mit Wasser gekühlt ist.

Eine weitere Lösung für Längsführungsmittel ist in Figur 11 dargestellt. Der Primärteil 3 ist auf beiden Stirnseiten mit Scheiben 47, 48 ausgerüstet, die jeweils thermisch isoliert am Primärteil 3 befestigt sind. Der Durchmesser der Scheiben 47, 48 ist so gewählt, dass sie die Führung im Sekundärteil 5 übernehmen. Der Vorteil dieser Lösung besteht darin, dass die äußere Umfangsfläche 15 des Primärteils 3 selbst nicht zur Längsführung verwendet wird, so dass er mit größeren Fertigungstoleranzen hergestellt werden kann. Bei dieser Lösung besteht auch die Möglichkeit, den Scheiben 47, 48 Führungsleisten 42 der zu den Figuren 9 und 10 beschriebenen Art zuzuordnen.

Bei der Ausführung nach Figur 12 sind zur Führung des Primärteils 3 stirnseitig daran befestigte Führungsstangen 51, 52 vorgesehen, die zentrale, als Gleitlager ausgebildete Öffnungen von Führungsringen 53, 54 durchsetzen. Die Führungsringe 53, 54 sind im Bereich der Enden des Sekundärteils 5, und zwar an ihrer inneren Umfangsfläche 19, befestigt. Zweckmäßig sind die Führungsstangen 51, 52 hohl, so dass Versorgungskabel und gegebenenfalls Kühlmittelleitungen hindurchgeführt werden können.

Zusätzlich können die Führungsringe 53, 54 als elektrisch, hydraulisch oder pneumatisch betätigbare Klemmvorrichtungen zum mechanischen Festsetzen des Läufers ausgebildet sein. Insbesondere bei Linearmotoren, die in Pressen oder Stanzen eingebaut werden, besteht diese Anforderung. Beispielsweise kann zumindest eine der inneren Umfangsflächen der Führungsringe 53, 54 eine Messingbuchse sein, die von einem mit Hydraulikflüssigkeit gefüllten Hohlraum umgeben ist. Solange die Buchse im plastischen Bereich betrieben wird, besteht die Möglichkeit, über den Druck der Hydraulikflüssigkeit die Bremse zu betätigen (angedeutet durch die Doppelpfeile 55). Eine Einrichtung dieser Art kann auch Bestandteil des Sekundärteils 5 sein. Mit Hilfe einer den Primärteil 3 umfassenden, in der inneren Umfangsfläche 19 des Sekundärteils 5 eingelassenen Buchse kann das Festsetzen und Lösen des Primärteils 3 erfolgen.

Wenn ein Linearmotor als Pumpe oder als Gewichtskompensationszylinder verwendet wird, besteht die Notwendigkeit, den Primärteil 3 so auszubilden, dass er zwei Räume dicht voneinander trennt. Dadurch lassen sich offene Räume für Pumpen oder geschlossene Räume für Kompensationszylinder schaffen. Figur 13 zeigt ein Beispiel, wie eine Abdichtung zwischen Primärteil 3 und Sekundärteil 5 verwirklicht werden kann. Der Primärteil 3 ist vorzugsweise an seine beiden Enden mit Dichtlippen 58 ausgerüstet. Statt der Dichtlippen können auch Kolbenringe, wie sie z. B. bei Verbrennungsmotoren eingesetzt werden, vorgesehen sein.

Bei Linearmotoren wird heute ein Längenmaßstab zur Positionsbestimmung und für die Stromeinstellung eingesetzt. Dies ist aufwendig, erfordert zusätzlichen Bauraum und hebt den Vorteil der sehr kompakten Bauform wieder auf. Eine relativ einfache Lösung ist die Verwendung des Magnetsystems in Verbindung mit Hallsensoren. Dazu werden auf einer Seite des Primärteils 3 mehrere Hallsensoren in einem bestimmten axialen Abstand (der vom Magnetsystem abhängt) angebracht.

Figur 14 zeigt eine Lösung, bei der ein Träger 61 an einer der Stirnseiten des Primärteils 3 befestigt ist. In den Magneten 6 zugewandten Aussparungen befinden sich zwei Hallsensoren 62. Diese messen das Magnetfeld des Magnetsystems. Aus diesen fast sinusförmigen Signalen lässt sich einfach eine Information über die Position des Primärteils 3 gegenüber dem Sekundärteil 5 gewinnen.

Linearmotoren weisen das Problem auf, dass es aufgrund magnetischer Unsymmetrien an den Enden des Primärteils 3 zu Rastkräften kommt, die eine gleichmäßige Bewegung des Motors verhindern. Diese Rastkräfte sind reine "Wechselkräfte", d. h., sie wirken periodisch in Bewegungsrichtung und gegen die Bewegungsrichtung. Diese pulsierenden Kräfte lassen sich zumindest reduzieren, wenn mit Hilfe zusätzlicher, magnetisch leitender Jochbauteile am Primärteil 3 für einen Rastkraftverlauf gesorgt wird, die den Verlauf der Rastkräfte des Primärteils 3 zumindest teilweise kompensieren. Dies lässt sich erreichen, indem z. B. ein U-förmiges Jochbauteil 64 (Figur 15) mittels einer nicht magnetischen Befestigung 65 auf einer Seite des Primärteils 3 mit diesem fest verbunden angebracht wird. Die offene Seite des U-förmigen Jochbauteils 64 ist dem Magnetsystem zugewandt. Es ist gegenüber den Jochbauteilen des Primärteiles 3 derart versetzt, dass es einen um 180° versetzten Beitrag liefert. Die Maße dieses Bauteils und dessen axiale Position bezogen auf das Primärteil hängen von der Geometrie des Magnetsystems und dem zu kompensierenden Rastkraftverlauf des Primärteils ab.

Die speziellen Lösungen, die anhand der Figuren 9, 10, 12, 13, 15 beschrieben wurden, sind an sich neu. Die Lösungen nach den Figuren 9, 10, 12, 15 sind z. B. auch bei rotationssymmetrisch aufgebauten Linearmotoren einsetzbar, die Lösung nach Figur 15 sogar auch bei planaren Linearmotoren.

Zusammenfassend ergeben sich durch die Vorschläge nach der Erfindung die folgenden wesentlichen Vorteile:
- Kostengünstige Fertigung durch geringe Anzahl von Einzelteilen (besonders im Primärteil); auch kann dasselbe Primärteil im vollkommen geschlossenen und im geöffneten Sekundärteil eingesetzt werden;
- einfache Erweiterbarkeit des Motors durch Aneinanderreihung von Grundelementen;
- beim geschlossenen Sekundärteil keine Abdeckung der Magnete notwendig; beim geöffneten Sekundärteil ist die abzudeckende Öffnung, verglichen mit den planaren Linearmotoren, relativ klein.

### Bezugszeichenliste

- 1: Linearmotor
- 2: Längs- bzw. Bewegungsachse
- 3: Primärteil
- 4: Spulen
- 5: äußere Sekundärteil
- 6: Permanentmagnete
- 11: Polringe
- 12: seitliche Vertiefungen
- 13: äußere aktive Pole
- 14: äußere passive Pole
- 15: äußere Umfangsfläche / Zylinderfläche
- 16: Jochbauteil
- 17: längsgeteilte Segmente
- 18: Rohrabschnitt / Rohr
- 19: Umfangsfläche / Zylinderfläche
- 20: ringförmiger Luftspalt
- 21: axial / längs erstreckende Öffnung
- 22: Träger
- 24: Führungsmittel
- 31: Abstandsringe
- 32: Polringe
- 33: seitliche Aussparungen
- 34: Stützringe
- 38: zylindrischer Träger
- 39: Edeltstahlzylinder
- 40: zylindrisches Gitter
- 42: Führungsleisten
- 43: Gegenlager
- 44: Feder
- 47, 48: Scheiben
- 51, 52: Führungsstangen
- 53, 54: Führungsringe
- 55: Doppelpfeile
- 58: Dichtlippen
- 61: Träger
- 62: Hallsensoren
- 64: u-förmiges Jochbauteil
- 65: Befestigung

## Patentansprüche

1. Linearmotor (1) mit einem mit Spulen (4) ausgerüsteten Primärteil (3) sowie mit einem mit Permanentmagneten (6) ausgerüsteten Sekundärteil(5), **dadurch gekennzeichnet, dass** der Sekundärteil (5) das Primärteil (3) zumindest teilweise umschließt, dass Bestandteile des inneren Primärteils (3) neben den Spulen (4) Jochbauteile (11) sind, die eine zentrale Achse (2) umgeben und äußere Pole (13, 14) bilden, und dass Bestandteile des Sekundärteils (5) neben den Permanentmagneten (6) ein der äußeren Form des Primärteils (3) angepasster und dieses zumindest teilweise umschließender Träger (16) ist, auf dessen Innenseite die Permanentmagneten (6) befestigt sind und der den magnetischen Rückschluss für die Permanentmagnetpole bildet.

2. Linearmotor (1) nach Anspruch 1,
**dadurch gekennzeichnet, dass**
seine Bauteile konzentrisch um die zentrale Achse (2) angeordnet sind.

3. Linearmotor (1) nach Anspruch 1,
**dadurch gekennzeichnet, dass**
seine Bauteile überwiegend konzentrisch um die zentrale Achse (2) angeordnet sind und dass der Sekundärteil (5) mit einer sich axial erstreckenden Öffnung (21) ausgerüstet ist.

4. Linearmotor (1) nach Anspruch 1,
**dadurch gekennzeichnet, dass**
sein Aufbau im Querschnitt mehreckig oder etwa oval ausgebildet ist.

5. Linearmotor (1) nach Anspruch 4,
**dadurch gekennzeichnet, dass**
der Sekundärteil (5) eine sich axial erstreckenden Öffnung (21) aufweist.

6. Linearmotor nach Anspruch 3 oder 5,
**dadurch gekennzeichnet, dass**
sich durch die axial erstreckende Öffnung (21) Träger (22) für den Primärteil 3 erstrecken.

7. Linearmotor nach Anspruch 6,
**dadurch gekennzeichnet, dass**
der Sekundärteil (5) über Linearführungen (24) am Träger (22) geführt ist.

8. Linearmotor nach einem der Ansprüche 1 bis 7,
**dadurch gekennzeichnet, dass**
der Primärteil (3) Polringe (11) besitzt, die auf ihrer Außenseite aktive und passive Pole (13 bzw. 14) bilden.

9. Linearmotor nach Anspruch 8,
**dadurch gekennzeichnet, dass**
drei aktive Pole und drei passive Pole ein Grundelement des Linearmotors (1) bilden.

10. Linearmotor nach einem der Ansprüche 1 bis 7,
**dadurch gekennzeichnet, dass**
der Primärteil (3) Polringe (11) besitzt, die auf ihrer Außenseite lediglich aktive Pole (13) bilden.

11. Linearmotor nach einem der Ansprüche 8 bis 10,
**dadurch gekennzeichnet, dass**
die Polringe (11) doppel-T-förmig ausgebildet sind und dass sich in den seitlichen Aussparungen (12) der aktiven Polringe Spulen (4) befinden.

12. Linearmotor nach einem der Ansprüche 8 bis 11,
**dadurch gekennzeichnet, dass**
Bestandteile der Polringe (11) aus Ringen bestehende Blechpakete sind, die sich seitlich über Polringe (31, 32) bzw. Abstandsringe (34) abstützen.

13. Linearmotor nach Anspruch 12,
**dadurch gekennzeichnet, dass**
die Ringbleche der Polringe (11) Umfangsunterbrechungen aufweisen.

14. Linearmotor nach einem der Ansprüche 8 bis 13,
**dadurch gekennzeichnet, dass**
die äußere Umfangsfläche (15) des Primärteils (3) vollständig geschlossen ist.

15. Linearmotor nach einem der Ansprüche 1 bis 14,
**dadurch gekennzeichnet, dass**
Bestandteile des Sekundärteils (5) Magnettafeln (6) mit einem äußeren Rückschluss (16) sind.

16. Linearmotor nach Anspruch 15,
**dadurch gekennzeichnet, dass**
der Rückschluss (16) aus einem gewickelten Blech besteht.

17. Linearmotor nach Anspruch 15 oder 16,
**dadurch gekennzeichnet, dass**
die innere Umfangsfläche (19) des Sekundärteils (5) von einem vorzugsweise aus Edelstahl bestehenden Zylinder (39) gebildet wird.

18. Linearmotor nach einem der Ansprüche 1 bis 17,
**dadurch gekennzeichnet, dass**
Mittel zur gegenseitigen Führung von Primärteil (3) und Sekundärteil (5) vorgesehen sind.

19. Linearmotor nach Anspruch 18,
**dadurch gekennzeichnet, dass**
stirnseitige Führungsscheiben (47, 48) vorzugsweise thermisch isoliert am Primärteil (3) befestigt sind.

20. Linearmotor insbesondere nach Anspruch 18 oder 19,
**dadurch gekennzeichnet, dass**
der Sekundärteil (5) mit sich axial erstreckenden Führungsleisten (42) ausgerüstet ist.

21. Linearmotor nach Anspruch 20,
**dadurch gekennzeichnet, dass**
die Führungsleisten (32) in radialer Richtung federnd am Sekundärteil (5) befestigt sind.

22. Linearmotor nach Anspruch 18,
**dadurch gekennzeichnet, dass**
stirnseitig am Primärteil (3) befestigte Führungsstangen (51, 52) vorgesehen sind, die zentrale, als Gleitlager ausgebildete Öffnungen von Führungsringen (53, 54) durchsetzen.

23. Linearmotor insbesondere nach Anspruch 22,
**dadurch gekennzeichnet, dass**
die Führungsringe (53, 54) als elektrisch, hydraulisch oder pneumatisch betätigbare Klemmvorrichtungen zum mechanischen Festsetzen des Primärteils (3) ausgebildet sind.

24. Linearmotor nach Anspruch 23,
**dadurch gekennzeichnet, dass**
zumindest eine der inneren Umfangsflächen der Führungsringe (53, 54) eine Messingbuchse ist, die von einem mit Hydraulikflüssigkeit gefüllten Hohlraum umgeben ist.

25. Linearmotor nach einem der Ansprüche 1 bis 24,
**dadurch gekennzeichnet, dass**
sich zwischen dem Primärteil (3) und dem Sekundärteil (5) Dichtringe (58) befinden.

26. Linearmotor nach einem der Ansprüche 1 bis 25,
**dadurch gekennzeichnet, dass**
der Primärteil (3) mit stirnseitig angeordneten Hallsensoren (62) ausgerüstet ist.

27. Linearmotor insbesondere nach einem der Ansprüche 1 bis 26,
**dadurch gekennzeichnet, dass**
der Primärteil mit einem umlaufenden Jochbauteil (64) ausgerüstet ist.

28. Verfahren zur Herstellung des Primärteils eines Linearmotors mit den Merkmalen eines oder mehrerer der Ansprüche 8 bis 14,
**dadurch gekennzeichnet, dass**
die Bauteile des Primärteils (3) auf einen Dorn geschoben und danach gegenseitig befestigt werden und dass der Dorn entweder entfernt oder zur Erhöhung der Stabilität des Primärteils (3) in seiner zentralen Öffnung verbleibt.

29. Verfahren zur Herstellung des Sekundärteils eines Linearmotors mit den Merkmalen eines oder mehrerer der Patentansprüche 14, 15 oder 16,
**dadurch gekennzeichnet, dass**
auf einen Träger (38) nacheinander ein Trennmittel, ein zylindrisches Gitter (40), dessen Öffnungen den Abmessungen der Permanentmagnettafeln (6) entsprechen, die Permanentmagnete (6) und der äußere Rückschluss aufgebracht werden und dass danach der Träger (38) entfernt wird.

30. Verfahren nach Anspruch 29,
**dadurch gekennzeichnet, dass**
anstelle des Trennmittels ein vorzugsweise aus Edelstahl bestehender Zylinder (39) auf den Träger (38) aufgesetzt wird und dass der Zylinder (39) die innere Umfangsfläche (19) des Sekundärteils (5) bildet.
